# FASCICULE DE BREVET EUROPEEN

(11) **EP 4 326 600 B1**
(45) Date de publication et mention de la délivrance du brevet: **26.08.2026**
(21) Numéro de dépôt: 22710676.2
(22) Date de dépôt: 22.02.2022
(51) Int. Cl.: B62D 21/11, B62D 21/15, B60K 5/12

(54) **VEHICULE AUTOMOBILE EQUIPE D'UN DISPOSITIF D'IMPACT ENTRE LA MOTORISATION ET LE BERCEAU AVANT**
KRAFTFAHRZEUG MIT EINER STOSSVORRICHTUNG ZWISCHEN DEM ANTRIEBSSYSTEM UND DER VORDERWIEGE
MOTOR VEHICLE EQUIPPED WITH AN IMPACT DEVICE BETWEEN THE DRIVE SYSTEM AND THE FRONT CRADLE

(30) Priorité: 22.04.2021 FR 2104194
(43) Date de publication de la demande: 28.02.2024
(73) Titulaire: Stellantis Auto SAS, 78300 Poissy (FR)
(72) Inventeur: GALMICHE, Jean Pierre, 25490 DAMPIERRE LES BOIS (FR); MEDECIN, Jean Louis, 70400 VYANS LE VAL (FR); LE GUILLOU, Olivier, 25200 MONTBELIARD (FR)
(74) Mandataire: PSIP
(86) Numéro de dépôt international: PCT/FR2022/050316
(87) Numéro de publication internationale: WO 2022/223894

(56) Documents cités:
- WO-A1-2021/038145
- FR-A1- 2 676 407
- FR-A1- 2 982 829
- FR-A1- 3 094 286

## Description

La présente invention concerne un véhicule automobile équipé d'un dispositif d'impact entre la motorisation et le berceau avant.

Les véhicules automobiles comportent généralement un berceau avant comprenant une plate-forme rigide fixée à la caisse du véhicule dans le compartiment avant, au niveau du plancher, qui reçoit de chaque côté des triangles de suspension des roues avant, et des supports du groupe motopropulseur.

Le groupe motopropulseur peut comporter un moteur thermique et une boîte de vitesses, ou un moteur de traction électrique disposant d'un réducteur. La transmission fixée à une extrémité du moteur, comporte deux arbres de sortie disposées transversalement en arrière du moteur, qui entraînent chacun une roue avant motrice du véhicule.

Par ailleurs l'homologation des véhicules nécessite des essais de chocs avant normalisés, afin de protéger les passagers lors d'un accident. En particulier on étudie le recul des organes mécaniques dans le compartiment moteur sous l'effet du choc, pour éviter des intrusions trop importantes d'éléments dans l'habitacle, enfonçant le tablier disposé en avant des pieds du conducteur et du passager avant, et qui pourraient les blesser.

A cet effet, un type de dispositif de protection contre l'impact connu, présenté notamment par le document FR-A1-2982829, fixé en bas du moteur thermique, comporte une partie inférieure disposée en avant d'un bord avant de la plate-forme du berceau, et une partie supérieure disposée entre ce moteur et un arbre transversal de roue.

En cas de fort choc avant sur le véhicule, la partie inférieure du dispositif de protection s'accroche sur le bord avant du berceau, et la partie supérieure évite un choc direct de l'arbre de transmission sur le carter du moteur qui pourrait entraîner des dommages importants.

Toutefois lors d'un choc avant la résistance au recul de la motorisation, passant par un dispositif d'impact prenant appui uniquement sur le bord avant du berceau du véhicule, est limitée par la tenue de ce dispositif sur le bord avant. On peut obtenir une déformation du métal importante avec une résistance insuffisante, qui laisse en fonction de l'effort du choc un recul trop élevé de la motorisation, avec des risques de blessures pour les passagers du véhicule.

En outre, l'état de la technique est connu du document FR2676407A1 correspondant au préambule de la revendication 1.

La présente invention a notamment pour but d'éviter ces problèmes de l'art antérieur.

Elle propose à cet effet un véhicule automobile comportant une motorisation disposée dans un compartiment à l'avant d'un véhicule suivant son sens de marche, un berceau comprenant une plate-forme fixée dans ce compartiment, une barre anti-dévers fixée suivant la direction verticale au-dessus de la plate-forme, et un dispositif d'impact fixé sur un bord avant de la plate-forme, en arrière d'un bloc d'impact fixé sur un groupe motopropulseur de ce véhicule, pour permettre lors d'un recul de ce groupe motopropulseur un appui du bloc d'impact sur le dispositif d'impact qui se déforme, le dispositif d'impact comportant une partie supérieure dépassant au-dessus de la plate-forme, qui lors d'une forte déformation prend appui sur la barre anti-dévers, ce véhicule étant remarquable en ce que le dispositif d'impact est formé par des tôles soudées sur le bord avant de la plate-forme.

Un avantage de ce véhicule est que de manière simple et économique, en prolongeant la partie supérieure du dispositif d'impact au-dessus de la plateforme, vers la barre anti-dévers, on obtient un point d'appui supplémentaire très résistant de ce dispositif, formé par cette barre anti-dévers, qui provoque une déformation additionnelle du dispositif apportant une raideur supplémentaire lors du recul de la motorisation.

On ajoute ainsi à l'accrochage sur le bord avant de la plate-forme, un point complémentaire de résistance qui permet, sans pièce supplémentaire, d'obtenir un effort total de retenue de la motorisation en fonction de son déplacement permettant de passer des normes de résistance très contraignantes.

Le véhicule automobile selon l'invention peut comporter de plus une ou plusieurs des caractéristiques suivantes, qui peuvent être combinées entre elles.

Avantageusement, le dispositif d'impact peut comporter une tôle supérieure et une tôle inférieure.

Avantageusement, le dispositif d'impact forme un caisson constitué par des tôles présentant suivant la direction transversale du véhicule un contour fermé, qui est ouvert vers l'avant.

Avantageusement, le dispositif d'impact comporte une tôle formant une face de dessus de ce dispositif, qui présente sur son bord arrière une patte inclinée vers le bas disposée en avant d'une partie transversale de la barre anti dévers.

Avantageusement, le dispositif d'impact comporte une tôle formant une face de côté vertical, présentant un contour arrière comprenant un creux arrondi disposé en avant d'une partie transversale de barre anti-dévers. Avantageusement, le dispositif d'impact comporte une tôle formant une face de dessus de ce dispositif, qui présente sur son bord avant une échancrure tournée vers le bloc d'impact.

Avantageusement, le bloc d'impact comporte sur sa face arrière un creux d'accrochage sur le dispositif d'impact.

Dans ce cas, avantageusement le creux d'accrochage est disposé en face de l'échancrure du dispositif d'impact.

Avantageusement, le véhicule comporte un jeu entre la partie supérieure du dispositif d'impact dépassant au-dessus de la plate-forme, et la barre anti-dévers, qui est inférieur à 20mm.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est une vue d'ensemble d'un berceau d'un véhicule automobile selon l'invention ;
[Fig. 2] est une vue de détail du dispositif d'impact de ce berceau ; et
[Fig. 3] est un schéma présentant lors d'un accident l'effort de retenue du recul du groupe motopropulseur en fonction de son déplacement.

Dans l'ensemble du document les côtés supérieur et inférieur et les expressions au-dessus ou en dessous, sont relatifs à un axe vertical lié à un véhicule posé sur une surface horizontale, la direction avant AV est relative au sens de marche de ce véhicule, les côtés droit et gauche sont définis en regardant vers l'avant du véhicule.

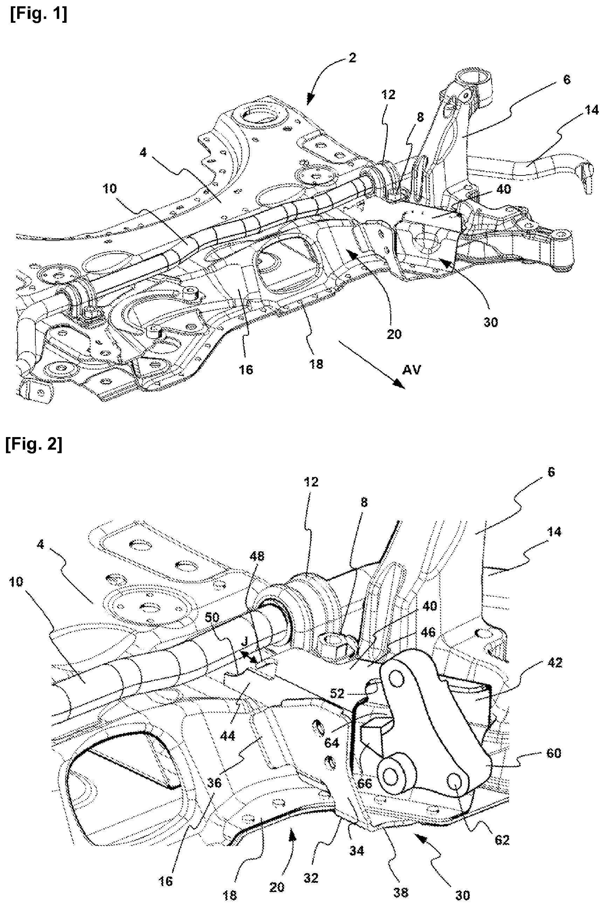

Les figures 1 et 2 présentent un berceau avant 2 d'un véhicule automobile, comportant une plate-forme 4 fixée dans le compartiment moteur au niveau du plancher du véhicule, recevant de chaque côté vers l'avant une chandelle 6 de fixation d'une suspension.

La plate-forme 4 du berceau 2 comporte deux tôles sensiblement parallèles et horizontales, reliées entre elles sur leurs contours pour former un caisson rigide. Une tôle du dessus présente une face avant 16 en pente inclinée vers le bas, se terminant par un rebord inférieur horizontal 18 formant un plan soudé sur le côté avant d'une tôle du dessous sensiblement plate, pour former le bord avant 20 de la plate-forme de berceau 4 présentant une grande rigidité.

Une barre anti-dévers reliant les suspensions des deux roues avant du véhicule, comporte une partie disposée suivant la direction transversale du véhicule 10, qui est maintenue à ses extrémités par des paliers 12 fixés sur le dessus de la plate-forme 4 par des vis 8, juste à côté des chandelles 6. La partie transversale 10 se prolonge de chaque côté après le palier 12 par une partie courbée vers l'avant 14 dont l'extrémité est reliée à la suspension. Les paliers 12 réalisent une liaison très rigide de la barre anti-dévers sur la plate-forme 4 du berceau 2, afin de guider cette barre lors des efforts importants qui peuvent être appliqués aux extrémités de la barre, avec les forts basculements de la caisse du véhicule.

Un dispositif d'impact 30 forme un petit caisson constitué par des tôles pliées, présentant suivant la direction transversale un contour fermé, ouvert vers l'avant et fortement rigide, qui est soudé sur le bord avant de plate-forme 20, juste à côté du palier gauche de barre anti dévers 12 et de la chandelle gauche 6.

Le dispositif d'impact 30 comporte une tôle inférieure 32 présentant vers la droite une face verticale 34 se terminant vers l'arrière par une patte pliée 36 soudée sur la face avant inclinée 16 du bord avant de plate-forme 20, et une face inférieure 38 soudée sur la tôle du dessous de plate-forme 4.

Le dispositif d'impact 30 comporte une tôle supérieure 40 présentant une face du dessus horizontale 46 se prolongeant vers la gauche par une face verticale 42 dont la base est soudée sur la tôle du dessus de plate-forme 4, et vers la droite par une face verticale 44 soudée sur la face verticale droite de tôle inférieure 34.

La face du dessus 46 de la tôle supérieure 40 présente sur son bord avant une découpe en creux formant une échancrure 52 qui s'étend vers l'arrière, et sur son bord arrière une patte inclinée vers le bas 48, qui est disposée un peu en avant de la partie transversale de la barre anti dévers 10. La face verticale droite 44 de la tôle supérieure 40 présente un contour arrière formant un creux arrondi 50 qui est disposé un peu en avant de la partie transversale de barre anti-dévers 10.

Avantageusement on dispose la patte inclinée 48 du bord arrière de la tôle supérieure 40 et le creux arrondi 50 de la face verticale droite 44, avec un jeu J de moins de 20mm en avant de la partie transversale de barre anti-dévers 10.

Un bloc d'impact 60 forme un élément métallique massif et rigide présentant des perçages 62 disposés suivant la direction transversale du véhicule, qui permettent une fixation solide sur le groupe motopropulseur, juste en avant du dispositif d'impact 30.

Le bloc d'impact 60 comporte sur sa face arrière un creux 64 disposé en avant de la face du dessus 46 de la tôle supérieure 40, face à l'échancrure 52 de son bord avant, qui se continue vers le bas par un bossage tourné vers l'arrière 66, en face de l'ouverture avant du caisson formé par le dispositif d'impact 30, pour rentrer dedans lors des déformations en réalisant un accrochage.

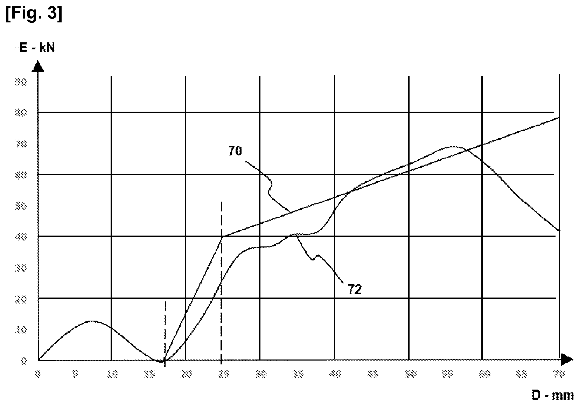

La figure 3 présente lors d'un choc avant important sur le véhicule entraînant un recul du groupe motopropulseur, des courbes décrivant l'effort de retenue E indiqué sur l'axe vertical en kilo-Newton kN, en fonction du déplacement D de ce groupe indiqué sur l'axe horizontal en millimètres mm. La courbe 70 présente une raideur demandée dans un cahier des charges, et la courbe 72 un résultat mesuré lors d'une simulation numérique effectuée pour un véhicule selon l'invention.

Le point de départ D0 à 0mm sur l'axe des déplacements D correspond à la position initiale du groupe motopropulseur. Le petit déplacement de la courbe d'effort mesuré 72 jusqu'au point d'appui à D1 à 17mm, avec un faible effort montant puis redescendant à zéro, correspond à la mise en appui du bloc d'impact 60 sur le dispositif d'impact 30, après un mouvement de ce groupe qui annule le jeu nécessaire autour de lui pour permettre les débattements de ses supports élastiques de filtration des vibrations.

A partir du point d'appui D1 la courbe de cahier des charges 70 comporte une prise linéaire rapide de l'effort jusqu'au point D2 à 28mm, pour atteindre 30kN, puis une pente plus faible qui donne à la fin un effort de 65kN pour un déplacement total de 70mm.

La courbe d'effort mesuré 72 présente pour un déplacement jusqu'à 40mm une valeur proche de la demande de la courbe de cahier des charges 70, puis au-delà une valeur d'effort qui dépasse cette demande. On a d'abord dans cette partie de courbe une déformation du dispositif d'impact 30 avec ses tôles qui se compactent vers l'arrière, puis après un déplacement suffisant donnant une annulation du jeu J une résistance supplémentaire venant de l'appui des bord arrière de la tôle supérieure 40 sur la partie transversale de barre anti-dévers 10.

On obtient un système de retenue du groupe motopropulseur efficace, qui en gardant le même principe de système d'impact peut encore être amélioré en ajustant les jeux pour atteindre complétement la demande du cahier des charges.

En utilisant un type de dispositif d'impact 30 comportant les deux tôles pliées et soudées, et en ajoutant des formes arrière à la tôle supérieure 40 pour un coût similaire, après un premier déplacement un appui sur la barre anti-dévers formant un point de forte résistance, on génère d'autres déformations absorbant une énergie. On obtient une courbe d'effort 72 plus élevée qui permet d'éviter des intrusions de composants dans l'habitacle du véhicule après un choc avant. La conformité aux normes de chocs avant peut être atteinte, et la sécurité des passagers est améliorée.

## Revendications

1. Véhicule automobile comportant une motorisation disposée dans un compartiment à l'avant d'un véhicule suivant son sens de marche, un berceau (2) comprenant une plate-forme (4) fixée dans ce compartiment, une barre anti-dévers (10) fixée suivant la direction verticale au-dessus de la plate-forme (4), et un dispositif d'impact (30) fixé sur un bord avant (20) de la plate-forme (4), en arrière d'un bloc d'impact (60) fixé sur un groupe motopropulseur de ce véhicule, pour permettre lors d'un recul de ce groupe motopropulseur un appui du bloc d'impact (60) sur le dispositif d'impact (30) qui se déforme, le dispositif d'impact (30) comportant une partie supérieure dépassant au-dessus de la plate-forme (4), qui lors d'une forte déformation prend appui sur la barre anti-dévers (10), **caractérisé en ce que** le dispositif d'impact (30) est formé par des tôles soudées sur le bord avant (20) de la plate-forme (4).

2. Véhicule automobile selon la revendication 1, **caractérisé en ce que** le dispositif d'impact comporte une tôle supérieure (40) et une tôle inférieure (32).

3. Véhicule automobile selon la revendication 1 ou 2, **caractérisé en ce que** le dispositif d'impact (30) forme un caisson constitué par des tôles présentant suivant la direction transversale du véhicule un contour fermé, qui est ouvert vers l'avant.

4. Véhicule automobile selon l'une quelconque des revendications 1 à 3, **caractérisé en ce que** le dispositif d'impact (30) comporte une tôle formant une face de dessus (46) de ce dispositif (30), qui présente sur son bord arrière une patte inclinée vers le bas (48) disposée en avant d'une partie transversale de la barre anti dévers (10).

5. Véhicule automobile selon l'une quelconque des revendications 1 à 4, **caractérisé en ce que** le dispositif d'impact (30) comporte une tôle formant une face de côté vertical (44), présentant un contour arrière comprenant un creux arrondi (50) disposé en avant d'une partie transversale de barre anti-dévers (10).

6. Véhicule automobile selon l'une quelconque des revendications 1 à 5, **caractérisé en ce que** le dispositif d'impact (30) comporte une tôle formant une face de dessus (46) de ce dispositif (30), qui présente sur son bord avant une échancrure (52) tournée vers le bloc d'impact (60).

7. Véhicule automobile selon l'une quelconque des revendications précédentes, **caractérisé en ce que** le bloc d'impact (60) comporte sur sa face arrière un creux d'accrochage (64) sur le dispositif d'impact (30).

8. Véhicule automobile selon les revendications 6 et 7, **caractérisé en ce que** le creux d'accrochage (64) est disposé en face de l'échancrure (52) du dispositif d'impact (30).

9. Véhicule automobile selon l'une quelconque des revendications précédentes, **caractérisé en ce qu'**il comporte un jeu (J) entre la partie supérieure du dispositif d'impact (30) dépassant au-dessus de la plate-forme (4), et la barre anti-dévers (10), qui est inférieur à 20mm.

## Patentansprüche

1. Kraftfahrzeug mit einem Motorantrieb, der in einem Raum vor einem Fahrzeug in Fahrtrichtung angeordnet ist, einem Gestell (2) mit einer in diesem Raum befestigten Plattform (4), einer in vertikaler Richtung über der Plattform (4) befestigten Überhöhungsschutzstange (10) und einer Aufprallvorrichtung (30), die an einer Vorderkante (20) der Plattform (4) hinter einem Aufprallblock (60) befestigt ist, der an einem Antriebsaggregat dieses Fahrzeugs befestigt ist, um beim Zurückziehen des Antriebsaggregats ein Aufprallen des Aggregats zu ermöglichen Aufprallvorrichtung (60) auf die sich verformende Aufprallvorrichtung (30), wobei die Aufprallvorrichtung (30) einen über die Plattform (4) vorstehenden Oberteil aufweist, der sich bei starker Verformung an der Überhöhungsschutzstange (10) abstützt, **dadurch gekennzeichnet, dass** die Aufprallvorrichtung (30) durch an der Vorderkante (20) der Plattform (4) angeschweißte Bleche gebildet ist.

2. Kraftfahrzeug nach Anspruch 1, **dadurch gekennzeichnet, dass** die Aufprallvorrichtung ein Oberblech (40) und ein Unterblech (32) aufweist.

3. Kraftfahrzeug nach Anspruch 1 oder 2, **dadurch gekennzeichnet, dass** die Aufprallvorrichtung (30) einen Kasten aus Blechen bildet, die in Fahrzeugquerrichtung eine geschlossene Kontur aufweisen, die nach vorne offen ist.

4. Kraftfahrzeug nach einem der Ansprüche 1 bis 3, **dadurch gekennzeichnet, dass** die Aufprallvorrichtung (30) ein eine Oberseite (46) dieser Vorrichtung (30) bildendes Blech aufweist, das an seiner Hinterkante eine nach unten geneigte Lasche (48) aufweist, die vor einem Querabschnitt der Überhöhungsschutzstange (10) angeordnet ist.

5. Kraftfahrzeug nach einem der Ansprüche 1 bis 4, **dadurch gekennzeichnet, dass** die Aufprallvorrichtung (30) ein eine vertikale Seitenfläche (44) bildendes Blech aufweist, das eine hintere Kontur mit einer abgerundeten Vertiefung (50) aufweist, die vor einem Überhöhungsstangenquerteil (10) angeordnet ist.

6. Kraftfahrzeug nach einem der Ansprüche 1 bis 5, **dadurch gekennzeichnet, dass** die Aufprallvorrichtung (30) ein eine Oberseite (46) dieser Vorrichtung (30) bildendes Blech aufweist, das an seiner Vorderkante eine dem Aufprallblock (60) zugewandte Aussparung (52) aufweist.

7. Kraftfahrzeug nach einem der vorhergehenden Ansprüche, **dadurch gekennzeichnet, dass** der Aufprallblock (60) auf seiner Rückseite eine Einhakvertiefung (64) an der Aufprallvorrichtung (30) aufweist.

8. Kraftfahrzeug nach den Ansprüchen 6 und 7, **dadurch gekennzeichnet, dass** die Einhakvertiefung (64) der Ausnehmung (52) der Aufprallvorrichtung (30) gegenüberliegend angeordnet ist.

9. Kraftfahrzeug nach einem der vorhergehenden Ansprüche, **dadurch gekennzeichnet, dass** es ein Spiel (J) zwischen dem oberen Teil der Aufprallvorrichtung (30), das über die Plattform (4) hinausragt, und der Überhöhungsschutzstange (10) aufweist, das kleiner als 20 mm ist.

## Claims

1. Motor vehicle comprising a motor arranged in a compartment at the front of a vehicle according to its running direction, a cradle (2) comprising a platform (4) fixed in this compartment, an anti-tilt bar (10) fixed along the vertical management above the platform (4), and an impact device (30) fixed on a front edge (20) of the platform (4), in rear with an impact unit (60) fixed on a power plant of this vehicle, to allow during a recoil of this power plant a bearing of the impact unit (60) on the impact device (30) which deforms, the impact device (30) comprising an upper part projecting above the platform (4), which during a strong deformation bears on the anti-tilt bar (10), **characterised in that** the impact device (30) is formed by sheets welded to the front edge (20) of the platform (4).

2. Motor vehicle according to claim 1, **characterised in that** the impact device comprises an upper plate (40) and a lower plate (32).

3. Motor vehicle according to claim 1 or 2, wherein the impact device (30) is a box made up of metal sheets having a closed outline along the transverse management of the vehicle, which outline is open towards the front.

4. Motor vehicle according to any one of Claims 1 to 3, **characterised in that** the impact device (30) comprises a metal sheet forming a top face (46) of this device (30), which has on its rear edge a downwardly inclined tab (48) arranged in front of a transverse part of the anti-tilt bar (10).

5. Motor vehicle according to any one of Claims 1 to 4, **characterised in that** the impact device (30) comprises a metal sheet forming a vertical side face (44), having a rear outline comprising a rounded recess (50) arranged in front of a transverse part of the anti-tilt bar (10).

6. Motor vehicle according to any one of Claims 1 to 5, **characterised in that** the impact device (30) comprises a metal sheet forming a top face (46) of this device (30), which has on its front edge a notch (52) shift towards the impact unit (60).

7. Motor vehicle according to any one of the previous claims, wherein the impact unit (60) comprises on its rear face a hollow attachment (64) to the impact device (30).

8. Motor vehicle according to Claims 6 and 7, **characterised in that** the attachment recess (64) is arranged opposite the notch (52) of the impact device (30).

9. Motor vehicle according to any one of the previous claims, **characterised in that** it comprises a clearance (J) between the upper part of the impact device (30) projecting above the platform (4), and the anti-tilt bar (10), which is less than 20 mm.
